Europäisches Patentamt

European Patent Office

Office européen des brevets

(19)

(11) Veröffentlichungsnummer: **0 047 936**

**A1**

## (12) EUROPÄISCHE PATENTANMELDUNG

(21) Anmeldenummer: **81106966.5**

(22) Anmeldetag: **04.09.81**

(51) Int. Cl.³: **G 01 N 21/90**

(30) Priorität: **17.09.80 DE 3035082**

(43) Veröffentlichungstag der Anmeldung:
**24.03.82  Patentblatt  82/12**

(84) Benannte Vertragsstaaten:
**DE FR NL**

(71) Anmelder: **SIEMENS AKTIENGESELLSCHAFT Berlin und München**
**Postfach 22 02 61**
**D-8000 München 22(DE)**

(72) Erfinder: **Neumann, Dieter, Ing.grad.**
**Marienstrasse 4 A**
**D-6729 Hagenbach(DE)**

(54) Verfahren und Anordnung zur optisch-elektronischen Erfassung von Oberflächenstrukturen an rotationssymmetrischen Körpern.

(57) Um an rotationssymmetrischen Körpern auch solche Oberflächenbereiche erfassen zu können, die im Schatten der Blickrichtung einer Fernsehkamera liegen, werden die an der Oberfläche reflektierten Lichtstrahlen zunächst symmetrisch zur Rotationsachse des Körpers zweifach mit unterschiedlichem Winkel gespiegelt und bei der zweiten Spiegelung in eine senkrecht zur Rotationsachse liegende Ebene projiziert. Die Spiegelung erfolgt mit Hilfe eines in sich und zur Rotationsachse des Körpers (2) rotationssymmetrischen Spiegelsystems, das aus einem kegelförmigen Spiegel (14) und einem kegelstumpfförmigen Hohlspiegel (16) besteht. Die spiegelnde Fläche (15) des kegelförmigen Spiegels ist der Fernsehkamera (4, 5) zugekehrt und gegenüber der Rotationsachse des Körpers stärker geneigt (ß) als (α₁) die spiegelnde Fläche (17) des kegelstumpfförmigen Hohlspiegels (16), die dem rotationssymmetrischen Körper (2) zugekehrt ist. Als rotationssymmetrischer Körper kommt insbesondere der außen mit einem Gewinde (3) versehene Mund von Flaschen (1) in Betracht.

FIG 1

SIEMENS AKTIENGESELLSCHAFT     Unser Zeichen

Berlin und München     VPA 80 P 3549

Verfahren und Anordnung zur optisch-elektronischen Erfassung von Oberflächenstrukturen an rotationssymmetrischen Körpern

1. Anwendungsgebiet der Erfindung

Die Erfindung liegt auf dem Gebiet der Prüfung von Oberflächen an rotationssymmetrischen Körpern und ist insbesondere bei der Erfassung von Beschädigungen am Flaschenmund von Flaschen aus Glas, Porzellan oder Steingut anzuwenden. Diese Anwendung ist vor allem dann sinnvoll, wenn der Flaschenmund außen mit einem Gewinde versehen ist.

2. Technischer Hintergrund

Im Zuge der automatischen Reinigung und Füllung von Flaschen ist es notwendig, diese auf eventuell verbliebene Verunreinigungen oder Fremdkörper zu überprüfen. Hierzu sind Verfahren und Anordnungen entwickelt worden, bei denen die Flaschen in Quer-und/oder Längsrichtung durchleuchtet werden und bei denen das Licht auf lichtempfindliche Empfänger fällt, deren elektrische Ausgangssignale ausgewertet werden. Als lichtempfindliche Empfänger können Fernsehkameras verwendet werden, bei denen das Objekt auf eine lichtempfindliche Schicht abgebildet und das Objektbild bzw. ein entsprechendes Ladungsbild zeilenweise mit einem Elektronenstrahl abgetastet wird (DE-AS 10 96 641, DE-OS 22 53 445, DE-OS 28 48 316).

Neben der üblichen Wand- und Bodenkontrolle an transparenten Behältern ist bei der Behandlung von Flaschen auch eine Kontrolle des Flaschenmundes durchzuführen.

Zm 3 Lo / 11.9.1980

Hier müssen beispielsweise Beschädigungen im Bereich der Öffnung festgestellt werden. Zu diesem Zweck ist bereits eine Anordnung vorgeschlagen worden, bei der konzentrisch zum Flaschenmund eine ringförmige Blitzlichtquelle vorgesehen und das Objektiv der Fernsehkamera in einem Tubus angeordnet ist. Blitzlichtquelle, Tubus und Flaschenmund sind einander so zugeordnet, daß nur die am Rand des Flaschenmundes reflektierten Lichtstrahlen in den Tubus und damit auf die lichtempfindliche Schicht der Fernsehkamera gelangen (DE-ANM P 29 16 361.9).

3. Darstellung der Erfindung

a) Aufgabe

Der Erfindung liegt die Aufgabe zugrunde, zur Erfassung der Oberflächenstruktur an rotationssymmetrischen Körpern ein Verfahren und eine Anordnung zu schaffen, mit dem bzw. mit der auch Oberflächenbereiche des rotationssymmetrischen Körpers erfaßt werden, die im Schatten der Blickrichtung einer einzigen Fernsehkamera liegen. Diese Aufgabe stellt sich insbesondere bei Körpern, bei denen die Oberfläche oder ein Teil der Oberfläche zylindrisch zur Rotationsachse verläuft oder mit zunehmendem Abstand von der Fernsehkamera eine Verjüngung aufweist. Ein solcher Körper ist beispielsweise der Mund einer Glasflasche, der aus der eigentlichen Flaschenöffnung und dem angrenzenden Halsabschnitt besteht.

b) Lösung

Ausgehend von einem Verfahren, bei dem der rotationssymmetrische Körper ringförmig beleuchtet wird und ein Teil der am Körper reflektierten Lichtstrahlen einer koaxial zur Rotationsachse des Körpers angeordneten Fernsehkamera zugeführt und das Videosignal der Fernsehkamera ausgewertet wird, ist zur Lösung der genannten Aufgabe erfindungsgemäß vorgesehen, daß die der Fernsehkamera zugeführten Lichtstrahlen nach ihrer Reflexion am rotationssymmetrischen Körper zunächst symmetrisch zur Rotationsachse des Körpers zweifach mit unterschiedlichem Winkel gespiegelt und dabei in eine senkrecht zur Rotationsachse liegende Ebene projiziert werden. Zur Durchführung dieses Verfahrens ist weiterhin eine Anordnung vorgesehen, bei der zwischen dem rotationssymmetrischen Körper und der Fernsehkamera konzentrisch zur Achse der gleichachsig zum Körper angeordneten Fernsehkamera eine Ringblitzlampe angeordnet ist, deren Durchmesser wesentlich größer als der Rotationsdurchmesser des betrachteten Körpers ist, und bei der gemäß der Erfindung über dem rotationssymmetrischen Körper gleichachsig zu diesem ein kegelförmiger Spiegel angeordnet ist, dessen Durchmesser gleich oder größer als der Rotationsdurchmesser des Körpers und dessen spiegelnde Fläche der Fernsehkamera zugekehrt ist; weiterhin ist vorgesehen, daß konzentrisch zu dem kegelförmigen Spiegel ein kegelstumpfförmiger Hohlspiegel angeordnet ist, dessen Öffnung größer oder höchstens gleich ist der Grundfläche des kegelförmigen Spiegels und gegenüber der optischen Achse der Fernsehkamera sowie der Rotationsachse des Körpers weniger geneigt ist als die spiegelnde Fläche des kegelförmigen Spiegels.

c) Vorteile und weitere Ausgestaltungen

Das neue Verfahren gewährleistet somit durch die zweifache, mit unterschiedlichen Winkeln erfolgende Umlenkung der Lichtstrahlen eine Abbildung auch derjenigen Oberflächenteile eines rotationssymmetrischen Körpers, die im Schatten der Blickrichtung der Fernsehkamera liegen. Damit kann beispielsweise bei Flaschen, deren Mund außen mit einem Gewinde versehen ist, auch dieser Bereich mit einer einzigen Fernsehkamera erfaßt und ausgewertet werden, ohne daß eine Relativbewegung zwischen Flasche und Kamera erforderlich ist.

Bei der hierzu vorgesehenen zweifachen Spiegelung der Lichtstrahlen ist der erste Reflexionswinkel kleiner als der zweite zu wählen. Dies führt wegen der konzentrischen und rotationssymmetrischen Anordnung der Spiegel zu einer verzerrten Darstellung des Körpers; beispielsweise bei einem Flaschenmund mit Außengewinde wird dieses als Spirale abgebildet.

Die durch die rotationssymmetrische Anordnung der Spiegel und deren unterschiedliche Neigung bedingte verzerrte Abbildung des Körpers kann zusätzlich dadurch beeinflußt werden, daß eine oder beide spiegelnden Flächen nicht nur in Umfangsrichtung, sondern auch senkrecht dazu gekrümmt sind. So könnte die spiegelnde Fläche des kegelförmigen Spiegels konvex gekrümmt und die spiegelnde Fläche des kegelstumpfförmigen Hohlspiegels konkav oder konvex gekrümmt sein. Bei konvexer Krümmung der spiegelnden Fläche des kegelförmigen Spiegels und konkaver Krümmung der spiegelnden Fläche des kegelstumpfförmigen Hohlspiegels würde das Außengewinde eines Flaschenmundes als Spirale abgebildet werden, die von einem die Flaschenöffnung abbildenden Kreis umgeben ist.

Hinsichtlich einer einfachen konstruktiven Ausgestaltung der gesamten Anordnung ist es im übrigen vorteilhaft, den kegelförmigen Spiegel und den kegelstumpfförmigen Hohlspiegel auf einer planparallelen entspiegelten Glasplatte anzuordnen und den kegelstumpfförmigen Hohlspiegel an der inneren Kante mit einer Lochblende zu versehen. Die Anordnung der Glasplatte verhindert dabei negative Rückwirkungen der notwendigen mechanischen Fixierung des kegelförmigen Spiegels auf den Strahlengang der reflektierten Lichtstrahlen, während die Blende einen
direkten Lichteinfall von dem beleuchteten und abgebildeten Körper auf die lichtempfindliche Schicht der Fernsehkamera unterbindet.

Um die Beleuchtung des rotationssymmetrischen Körpers
zu vergleichmäßigen, empfiehlt es sich im übrigen, die
Ringblitzlampe mit einer Streuglasscheibe abzudecken.
Auch kann zwischen den beiden Spiegeln und der Fernsehkamera eine Mattscheibe oder ein Linsensystem angeordnet
sein, wenn die Beschaffenheit des Kameraobjektivs oder
der Spiegel eine Zwischenabbildung erforderlich macht.

Eine weitere Variante des Spiegelsystems ergibt sich,
wenn auch der kegelförmige, über dem rotationssymmetrischen Körper angeordnete Spiegel als Kegelstumpf ausgebildet ist. Dadurch wird zunächst im Zentrum der beobachteten Spiegelfläche ein Freiraum geschaffen. Wenn man
nun den Spiegel mit einer Axialbohrung versieht und in
dieser Bohrung ein Linsensystem anordnet, so läßt sich
auf diese Weise bei der Flaschenkontrolle gleichzeitig
der Flaschenboden beobachten. Eine entsprechende Beleuchtung bzw. Durchleuchtung des Flaschenbodens ist dabei
eine Voraussetzung.

d) Ausführungsbeispiele

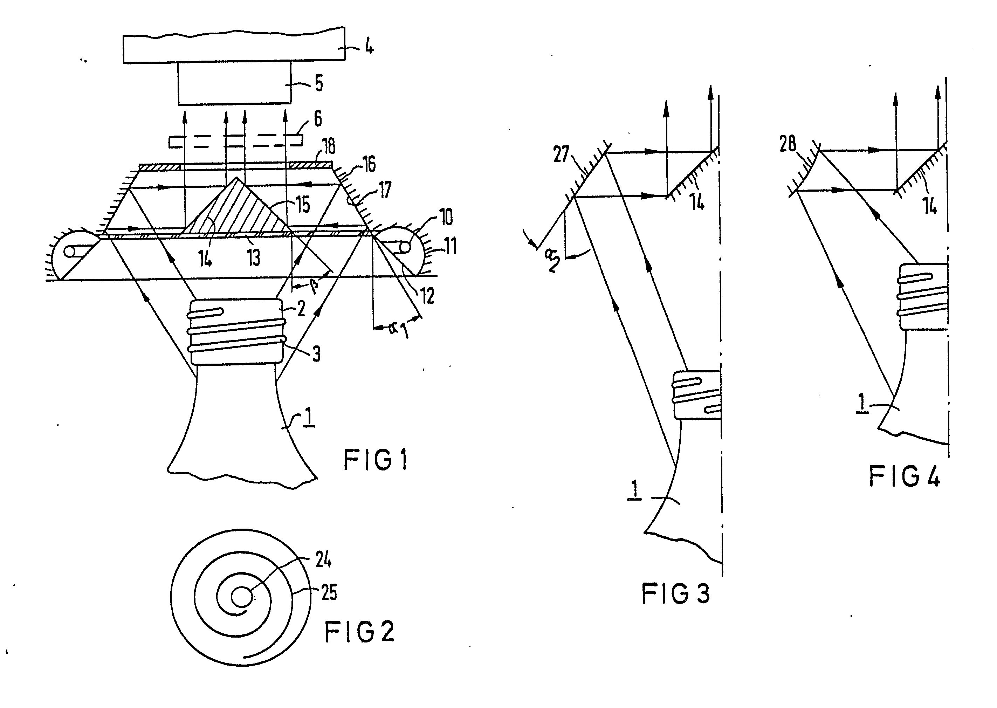

Ausführungsbeispiele einer zur Durchführung des neuen
Verfahrens geeigneten Anordnung sind in den Figuren 1
und 3 bis 5 dargestellt. Fig. 2 zeigt die Abbildung eines
Flaschenmundes.

Gemäß Fig. 1 ist über der Flasche 1, die den Flaschenmund 2 aufweist, koaxial zur Flaschenachse die Fernsehkamera 4 mit dem Kameraobjektiv 5 angeordnet. Mit dieser
Fernsehkamera erfolgt eine Beobachtung des Flaschenmundes. Der Fernsehkamera ist eine nicht näher dargestel te und auch nicht näher beschriebene elektronische Auswerteeinrichtung nachgeschaltet. Anstelle der Fernsehkamera kann auch eine Fotodiodenmatrix verwendet werden.

Zwischen dem Flaschenmund 2, der außen mit einem Gewinde 3 versehen ist, und der Fernsehkamera 4 ist die ringförmige Blitzlampe 10 angeordnet, der ein Deflektor 11 und eine Streuglasscheibe 12 zugeordnet sind. Mit der Blitzlampe 10 wird der Flaschenmund 2 impulsartig beleuchtet. Die Blitzlampe 10 ist Teil einer kombinierten Beleuchtungs- und Spiegeleinrichtung, die im übrigen aus der planparallelen, beidseitig entspiegelten Glasscheibe 13 und den darauf angeordneten Spiegeln 14 und 16 besteht. Die Glasscheibe 13 verläuft senkrecht zur Achse der Flasche 1. Die gesamte Beleuchtungs- und Spiegeleinrichtung ist rotationssymmetrisch zur Achse der Flasche 1 aufgebaut. Bei dem Spiegel 14 handelt es sich um einen kegelförmigen Spiegel, dessen spiegelnde Fläche 15 der Kamera 4 zugekehrt ist. Konzentrisch dazu ist der kegelstumpfförmige Hohlspiegel 16 angeordnet, dessen spiegelnde Fläche 17 dem Flaschenmund 2 zugekehrt ist. Damit die am Flaschenmund reflektierten und auf den Hohlspiegel 16 auftreffenden Lichtstrahlen in das Objektiv der Fernsehkamera 4 gelangen, ist der Neigungswinkel $\alpha_1$ der spiegelnden Fläche 17 gegenüber der optischen Achse des Systems kleiner gewählt als der Neigungswinkel ß der spiegelnden Fläche 15. Demnach treffen die am Flaschenmund 2 reflektierten Lichtstrahlen zunächst auf die spiegelnde Fläche 17, gelangen von dort auf die spiegelnde Fläche 15 und werden dann parallel zueinander dem Kameraobjektiv 5 zugeführt. Bei der dargestellten Anordnung weisen die spiegelnden Flächen 15 und 17 geradlinige Mantellinien auf. Die durch die Spiegelung gegebene optische Verzerrung in der Abbildung des Flaschenmundes 2 führt zu der in Fig. 2 dargestellten Abbildung, die durch einen Kreisring 24 und eine diesen umgebende Spirale 25 gekennzeichnet ist. Die Spirale 25 stellt dabei die Abbilbildung des Gewindes 3 dar, während die kreisförmige Öffnung des Flaschenmundes durch den Kreisring 24 dargestellt wird.

Hinsichtlich der praktischen Ausgestaltung der gesamten Anordnung ist zu berücksichtigen, daß der Durchmesser des kegelförmigen Spiegels 14 größer oder annähernd gleich groß dem Durchmesser des Flaschenmundes 2 ist und daß die ringförmige Öffnung des Hohlspiegels 16 größer ist als die Grundfläche des kegelförmigen Spiegels 14. Um hierbei eine direkte Einstrahlung reflektierter Lichtstrahlen in das Kameraobjektiv 5 zu verhindern, ist an der inneren Kante des Hohlspiegels 16 die Kreisringblende 18 angeordnet. Im übrigen ist der Durchmesser der ringförmigen Blitzlampe 10 größer als der Durchmesser des Hohlspiegels 16 gewählt.

Zwischen dem Hohlspiegel 16 und dem Kameraobjektiv 5 ist gestrichelt eine Anordnung 6 angedeutet, bei der es sich um eine Mattscheibe oder ein Linsensystem handeln kann. Derartige Einrichtungen können erforderlich werden, wenn die Beschaffenheit des Kameraobjektivs 5 oder der Spiegel 14 und 16 eine Zwischenabbildung erfordern.

Gemäß der schematischen Darstellung in Fig. 3 kann durch eine größere Neigung $\alpha_2$ der spiegelnden Fläche des kegelstumpfförmigen Hohlspiegels 27 ein größerer Bereich des Flaschenmundes bzw. des Flaschenhalses erfaßt werden, wenn hierbei auch der Abstand zwischen den Spiegeln und der Flasche vergrößert wird.

Das gleiche Ziel kann gemäß Fig. 4 bei geringem Abstand Spiegel - Flasche mit einem konvex gekrümmten kegelstumpfförmigen Hohlspiegel 28 erreicht werden.

VPA 80 P 3549

Bei Verwendung eines konkav gekrümmten kegelstumpfförmigen Hohlspiegels wird dagegen der Beobachtungsbereich verkleinert und kann beispielsweise auf den Flaschenmund konzentriert werden.

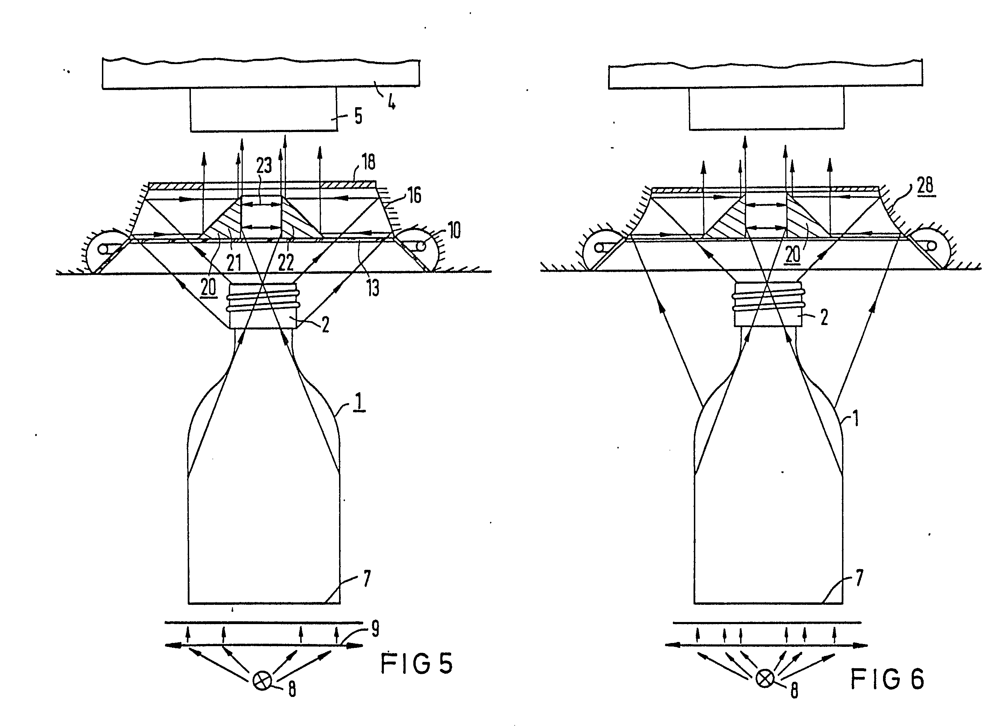

Bei dem Ausführungsbeispiel gemäß Fig. 5 ist zusätzlich zur Beobachtung des Flaschenmundes 2 der Flasche 1 eine Beobachtung des Flaschenbodens 7 vorgesehen. Hierzu ist der innere Spiegel des Spiegelsystems als Kegelstumpf 20 ausgebildet und mit der Axialbohrung 21 versehen. In dieser Bohrung befindet sich ein Linsensystem 22/23, das die vom Flaschenboden kommenden Lichtstrahlen in das Objektiv 5 der Fernsehkamera 4 lenkt. Unter dem Flaschenboden 7 ist eine geeignete Beleuchtungseinrichtung angeordnet, die aus der Lichtquelle 8 und dem Linsensystem 9 zur gleichmäßigen Helligkeitsverteilung besteht.

Bei dem Ausführungsbeispiel gemäß Fig. 6 ist wie in der Anordnung nach Fig. 4 abweichend von dem Ausführungsbeispiel gemäß Fig. 5 der äußere Spiegel 28 des Spiegelsystems mit einer in Richtung der Mantellinien konvex gekrümmten Oberfläche versehen.

10 Patentansprüche
6 Figuren

Patentansprüche

1. Verfahren zur Erfassung der Oberflächenstruktur an rotationssymmetrischen Körpern, insbesondere zur Erfassung von Beschädigungen an einem Flaschenmund, bei dem der rotationssymmetrische Körper ringförmig beleuchtet wird und ein Teil der am Körper reflektierten Lichtstrahlen einer koaxial zur Rotationsachse des Körpers angeordneten Fernsehkamera zugeführt und das Videosignal der Fernsehkamera ausgewertet wird, d a d u r c h   g e - k e n n z e i c h n e t ,   daß die der Fernsehkamera zugeführten Lichtstrahlen nach ihrer Reflexion am rotationssymmetrischen Körper zunächst symmetrisch zur Rotationsachse des Körpers zweifach mit unterschiedlichem Winkel gespiegelt und dabei in eine senkrecht zur Rotationsachse liegende Ebene projiziert werden.

2. Verfahren nach Anspruch 1, d a d u r c h   g e - k e n n z e i c h n e t ,   daß die reflektierten Lichtstrahlen bei der Spiegelung optisch verzerrt werden.

3. Anordnung zur Durchführung des Verfahrens nach Anspruch 1, bei der zwischen dem rotationssymmetrischen Körper (2) und der Fernsehkamera (4, 5) konzentrisch zur Achse der gleichachsig zum Körper angeordneten Fernsehkamera eine Ringblitzlampe (10, 11, 12) angeordnet ist, deren Durchmesser wesentlich größer als der Rotationsdurchmesser des betrachteten Körpers ist, d a d u r c h   g e k e n n z e i c h n e t ,   daß über dem rotationssymmetrischen Körper (2) gleichachsig zu diesem ein kegelförmiger Spiegel (14) angeordnet ist, dessen Durchmesser gleich oder größer als der Rotationsdurchmesser des betrachteten Körpers (2) und dessen spiegelnde Fläche (15) der Fernsehkamera (4, 5) zugekehrt ist, und daß konzentrisch zu dem kegelförmigen Spiegel (14, 15) ein kegelstumpfförmiger Hohlspiegel (16) angeordnet ist, dessen Öffnung größer oder höchstens gleich ist der Grundfläche des kegelförmigen Spiegels (14, 15) und dessen spiegelnde Fläche (17) dem Körper (2) zugekehrt und gegenüber der optischen Achse der Fernsehkamera sowie der Rotationsachse des Körpers weniger geneigt ($\alpha_1$) ist als (ß) die spiegelnde Fläche (15) des kegelförmigen Spiegels (14).

4. Anordnung nach Anspruch 3 zur Durchführung des Verfahrens nach Anspruch 2, d a d u r c h g e k e n n - z e i c h n e t , daß die spiegelnde Fläche (15) des kegelförmigen Spiegels (14) geradlinige Mantellinien aufweist und daß die spiegelnde Fläche (17) des kegelstumpfförmigen Hohlspiegels (16) konkav gekrümmt ist.

5. Vorrichtung nach Anspruch 3 oder 4, d a d u r c h g e k e n n z e i c h n e t , daß der kegelstumpfförmige Hohlspiegel (16, 17) an der inneren Kante mit einer Lochblende (18) versehen ist.

6. Vorrichtung nach einem der Ansprüche 3 bis 5, d a - d u r c h g e k e n n z e i c h n e t , daß der kegelförmige Spiegel (14) und der kegelstumpfförmige Hohlspiegel (16) auf einer planparallelen entspiegelten Glasplatte (13) angeordnet sind.

7. Vorrichtung nach einem der Ansprüche 3 bis 6, d a - d u r c h g e k e n n z e i c h n e t , daß der Durchmesser der Ringblitzlampe (10) größer als der Durchmesser des kegelstumpfförmigen Hohlspiegels (16) ist.

8. Vorrichtung nach einem der Ansprüche 3 bis 7, d a - d u r c h g e k e n n z e i c h n e t , daß die Ringblitzlampe (10) mit einer Streuglasscheibe (12) abgedeckt ist.

9. Vorrichtung nach einem der Ansprüche 3 bis 8, d a - d u r c h   g e k e n n z e i c h n e t , daß zwischen den beiden Spiegeln (14, 16) und der Fernsehkamera (4, 5) eine Mattscheibe oder ein Linsensystem (6) angeordnet ist.

10. Vorrichtung nach einem der Ansprüche 3 bis 9, d a - d u r c h   g e k e n n z e i c h n e t , daß der kegelförmige Spiegel aus einem Kegelstumpf (20) besteht, der mit einer Axialbohrung (21) versehen ist, und daß in dieser Axialbohrung ein optisches Linsensystem (22, 23) angeordnet ist.

FIG 4

FIG 3

FIG 1

FIG 2

FIG 5

FIG 6

0047936

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | PATENTS ABSTRACTS OF JAPAN, Band 4, Nr. 58(P-9)(540), 30. April 1980, Seite 14P9<br>& JP - A - 55 27918 (HITACHI ZOSEN)<br>* Insgesamt * | 1-3,9 |
| | DE - A - 2 718 802 (PONNDORF HAN-DELSGES.)<br>* Seite 7, Figur 1 * | 3,7,10 |
| A | US - A - 3 551 061 (M. GLOWA)<br>* Spalten 2,3; Figuren 1,4 * | 2,10 |
| AP D | DE - A - 2 916 361 (SIEMENS A.G.)<br>* Seiten 12,14; Figuren 1,2 * | 1,3,7 |
| A | DE - A - 2 909 061 (SIEMENS A.G.)<br>* Seiten 6,7; Figur 1 * | 1,8 |
| A | US - A - 3 399 592 (H. BRACHVOGEL et al.)<br>* Spalte 2, Figuren 1,2 * | 2 |

**KLASSIFIKATION DER ANMELDUNG (Int Cl³)**

G 01 N 21/90

**RECHERCHIERTE SACHGEBIETE (Int. Cl.³)**

G 01 N 21/90
G 01 B 11/24
G 01 B 9/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-12-1981 | BOEHM |

EPA form 1503.1  06.78